# EUROPÄISCHE PATENTSCHRIFT

(11) **EP 0 776 804 B1**
(45) Veröffentlichungstag und Bekanntmachung des Hinweises auf die Patenterteilung: **19.01.2000**
(21) Anmeldenummer: 96117212.9
(22) Anmeldetag: 26.10.1996
(51) Int. Cl.: B60T 1/087, F16D 57/04

(54) **Antriebseinheit**
Drive unit
Unité d'entraînement

(30) Priorität: 28.11.1995 DE 19544189
(43) Veröffentlichungstag der Anmeldung: 04.06.1997
(73) Patentinhaber: Voith Turbo GmbH & Co. KG, 89522 Heidenheim (DE)
(72) Erfinder: Adams, Werner, 74564 Crailsheim (DE); Edelmann, Peter, 89522 Heidenheim (DE); Friedrich, Jürgen, 74564 Crailsheim (DE); Heilinger, Peter, 74564 Crailsheim (DE); Rose, Peter, 74523 Schwäbisch Hall (DE); Vogelsang, Klaus, 74564 Crailsheim (DE)
(74) Vertreter: Dr. Weitzel & Partner

(56) Entgegenhaltungen:
- DE-A- 1 575 798
- DE-A- 1 946 167
- DE-A- 2 536 805
- DE-U- 8 613 508
- US-A- 3 297 114
- US-A- 3 367 461

## Beschreibung

Die Erfindung betrifft eine Antriebseinheit für ein Kraftfahrzeug mit einem Motor, einem hydrodynamischen Retarder und einem Getriebe gemäß dem Oberbegriff von Anspruch 1.

Retarder spielen bei Antriebsanlagen von Fahrzeugen eine immer wichtigere Rolle. Sie sind in den Antriebsstrang integriert. Der Retarder wird beim Einsatz im Kraftfahrzeug - aber auch bei Anlagen mit stark wechselndem Betrieb - durch Füllen und Entleeren des beschaufelten Arbeitskreislaufes mit einem Arbeitsmedium ein- oder ausgeschaltet. Als Arbeitsmedium kommen z.B. Öl oder Wasser in Betracht. Leistet der Retarder Bremsarbeit, so wird das Arbeitsmedium erwärmt. Die Wärme muß durch einen Kühler abgeführt werden.

Antriebseinheiten von Kraftfahrzeugen haben in der Regel weitere Aggregate, die eine Kühlung benötigen. Hierbei ist beispielsweise an den Motor, die mechanischen Bremsen, an die Kupplung oder an das Getriebe zu denken. Diese anderen Aggregate können ebenfalls einen Kühlkreislauf aufweisen. Es ist bekannt, bei einer Antriebsanlage für Fahrzeuge den Retarder mit Wasser zu betreiben, das gleichzeitig als Kühlwasser dient. Dabei kann der Retarder im Nicht-Bremsbetrieb wahlweise als Pumpe verwendet werden und das Arbeitsmedium des Retarders, gleichzeitig als Kühlmedium für andere Aggregate der Antriebseinheit dienen.

DE 195 09 417 A1 zeigt und beschreibt einen Antriebsstrang für ein Kraftfahrzeug mit einem Motor, einem Getriebe und einem Retarder. Dabei ist der Retarder in das Getriebeendgehäuse integriert.

Die US-A-3 367 461 zeigt eine Antriebseinheit für ein Kraftfahrzeug mit einem Retarder, wobei die Retarderwelle von zwei Lagern getragen wird und ein Dichtelement vorgesehen ist.

Aus der DE-A-1946167 ist ein hydrodynamischer Retarder bekanntgeworden, bei dem der Rotor der Bremseinrichtung von der Welle des Antriebsmotors angetrieben wird. Des weiteren weist die Welle zwei Lippendichtungen sowie eine Drehdichtung auf, wobei der Freiraum zwischen der gleitenden Drehdichtung und der nächstliegenden Lippendichtung eine Öffnung umfaßt.

DE-A-1575798 zeigt einen hydrodynamischen Retarder mit einer Welle und einer Kolbenringdichtung, die das Schmiermittel des Retarderlagers und des Getriebes vom Arbeitsmedium des Retarders trennt.

Der Erfindung liegt die Aufgabe zugrunde, einen solchen Antriebsstrang, wie beispielsweise aus der DE-A-19509417 bekannt, dahingehend weiterzuverbessern, daß Fertigung und Montage von Retarder und Getriebe noch einfacher, rationeller und damit kostengünstiger werden. Insbesondere wird auch eine kompakte Anordnung angestrebt.

Diese Aufgabe wird durch die Merkmale von Anspruch 1 gelöst.

Beim Retarder gemäß der Erfindung ist die Anordnung so getroffen, daß der Retarder als selbständige Baueinheit auf die Retarderwelle aufsteckbar ist. Die Retarderwelle wird von zwei Lagern getragen. Erfindungsgemäß wird die Retarderwelle in einem Wandteil gelagert, das Bestandteil des Getriebegehäuses ist, wobei die Dichtung bzw. das Dichtelement sich auf der Retarderwelle innerhalb der Außenwandung des Getriebes befinden.

In einer Ausgestaltung der Erfindung kann die in diesem Wandteil gelagerte Retarderwelle über das Wandteil hinausragen, so daß es den komplett vormontierten Retarder durch Aufstecken aufnehmen kann.

Die Dichtung zwischen Getriebegehäuse und Retarder hat eine Doppelfunktion: Zum einen dichtet sie gegen das Schmiermittel des Retarderlagers und/oder das Getriebeöl ab, zum anderen gegen das Arbeitsmedium des Retarders. Der Retarder kann mit einem anderen Arbeitsmedium betrieben werden als Öl. In diesem Falle muß dafür gesorgt werden, daß die beiden Medien, nämlich das Arbeitsmedium des Retarders einerseits und das Schmiermittel des Getriebes andererseits nicht in leitender Verbindung miteinander stehen. Dies wird durch die genannte Dichtung erreicht. Dies schließt natürlich nicht aus, daß beide Medien miteinander identisch sind, so daß auch der Retarder mit Öl als Arbeitsmedium betrieben wird.

Das Dichtelement kann ein- oder mehrteilig ausgeführt sein, beispielsweise als Doppelelement.

Bei der bevorzugten Ausführungsform als Doppelelement ist ein Zwischenraum zwischen den beiden Dichtelementen vorgesehen. Dieser kann befüllt sein, beispielsweise mit einer Flüssigkeit, die als Sperrmedium wirkt. In einer alternativen Ausführungsform ist vorgesehen, daß der Freiraum mit einem Gas, beispielsweise Luft, befüllt ist und eine Leckageöffnung umfaßt. Dies ermöglicht eine schnelle und sichere Identifizierung einer Leckage.

Die Erfindung ist anhand der Zeichnung beispielhaft näher erläutert.

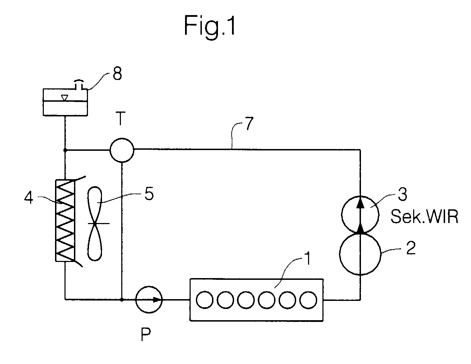

In Figur 1 ist schematisch ein Antriebsstrang dargestellt, umfassend einen Motor 1, ein Getriebe 2, einen hydrodynamischen Retarder 3 mit einem Kühlmedium als Arbeitsmedium, einen Wärmetauscher 4, einen diesem zugeordneten Lüfter 5, eine Umwälzpumpe 6, Kühlwasserleitungen 7 sowie einen Ausgleichsbehälter 8.

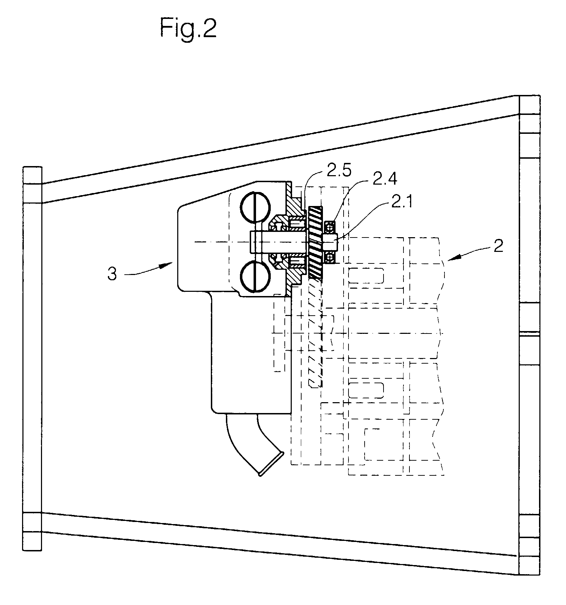

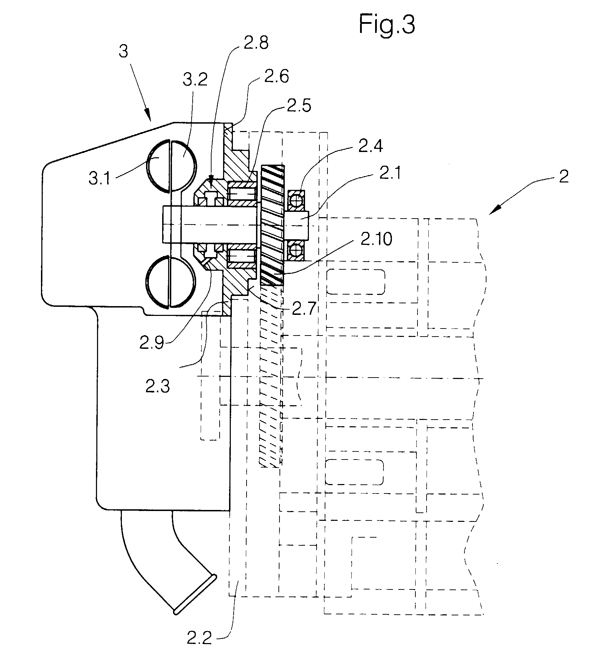

Figur 2 zeigt in einer Teilansicht eine Ausführungsform der erfindungsgemäßen Anordnung mit gestrichelt dargestellten Teilen des Getriebes 2 und mit dem Retarder 3. Der Retarder weist ein Rotorschaufelrad 3.1 sowie ein Statorschaufelrad 3.2 auf. Er ist auf einer Welle 2.1 gelagert. Welle 2.1 ist in dieser Ausführungsform ihrerseits unter anderem in einer Außen-Wandung des Getriebes 2 gelagert. Dies ergibt sich noch genauer aus Figur 3.

Das Getriebe 2 weist ein Gehäuse 2.2 auf. In die Gehäusewandung ist ein Deckel 2.3 eingesetzt. Deckel 2.3 ist mit der übrigen Gehäusewandung des Getriebegehäuses 2.2 verschraubt und hierbei gegen dieses abgedichtet. Die Retarderwelle 2.1 ist mittels zweier Lager 2.4 und 2.5 gelagert. Dabei befindet sich Lager 2.4 innerhalb des vom Getriebegehäuse 2.2 umschlossenen Raumes, während Lager 2.5 in Deckel 2.3 angeordnet ist.

Retarder 3 ist als selbständige Baueinheit vormontiert und auf die Retarderwelle 2.1 von außen her aufgesteckt. Es ist denkbar, Retarder 3 teilmontiert aufzustecken.

Deckel 2.3 weist eine äußere Begrenzungsfläche 2.6 auf, auf welche die Retarder-Baueinheit 3 aufgesetzt ist, ferner eine innere Begrenzungsfläche 2.7, die in eine entsprechende Aussparung des Getriebegehäuses 2.2 eingefügt ist.

Deckel 2.3 trägt außerdem eine Dichtung 2.8. Diese Dichtung 2.8 hat eine Doppelfunktion: Sie dichtet den Ringspalt zwischen Deckel 2.3 und Retarderwelle 2.1 einerseits gegen das Getriebeöl ab und andererseits gegen das Arbeitsmedium des Retarders 3, in diesem Falle ein Kühlmedium. Die Dichtung kann als einziges Element oder als Doppelelement ausgebildet sein.

Man erkennt ferner eine Leckagebohrung 2.9 in Deckel 2.3. Diese dient der Abfuhr von Leckflüssigkeit nach außen.

Die Retarderwelle 2.1 trägt ferner ein Ritzel 2.10. Dies ist Bestandteil eines Hochganges, mit dem die Retarderwelle 2.1 auf höhere Drehzahlen gebracht wird. Das Ritzel kann ein- oder mehrteilig ausgeführt sein, je nachdem, wie Bauraum zur Verfügung steht und welche Übersetzung erreicht werden soll.

Beim Retarder 3 können Rotorschaufelrad 3.1 und Statorschaufelrad 3.2 in axialer Richtung vertauscht werden, so daß gegenüber der Darstellung gemäß Figur 3 das Rotorschaufelrad 3.1 dem Deckel 2.3 näher ist als das Statorschaufelrad.

## Patentansprüche

1. Antriebseinheit für ein Kraftfahrzeug;
1.1 mit einem Motor (1);
1.2 mit einem Getriebe (2), das ein Getriebegehäuse (2.2) aufweist;
1.3 mit einem Retarder (3), der einen Rotor (3.1) und einen Stator (3.2) aufweist;
1.4 es ist eine Retarderwelle (2.1) vorgesehen, die von wenigstens zwei Lagern (2.4, 2.5) getragen ist; wobei
1.5 ein Dichtelement (2.9) zwischen Getriebegehäuse und Retarder (3) derart angeordnet ist, daß
1.6 das Schmiermittel des Retarderlagers und/oder des Getriebes (2) von dem Arbeitsmedium des Retarders getrennt wird,
dadurch gekennzeichnet, daß
1.7 das Dichtelement sich auf der Retarderwelle (2.1) innerhalb der Außenwandung (2.3) des Getriebegehäuses (2.2) befindet und
1.8. derjenige Teil der Außenwandung (2,3), der den Retarder bzw. die Retarderwelle trägt, als Deckel ausgebildet und mit dem übrigen Getriebegehäuse (2.2) verbunden ist.

2. Antriebseinheit gemäß Anspruch 1, dadurch gekennzeichnet, daß die Retarderwelle (2.1) im Getriebe gelagert ist.

3. Antriebseinheit gemäß einem der Ansprüche 1 bis 2, dadurch gekennzeichnet, daß die Retarderwelle (2.1) frei über eine Außenwandung (2.3) des Getriebegehäuses (2.2) hinausragt.

4. Antriebseinheit nach einem der Ansprüche 1 bis 3, dadurch gekennzeichnet, daß die Retarderwelle (2.1) zugleich ein Ritzel (2.10) eines Hochganges trägt.

5. Antriebseinheit gemäß Anspruch 4, dadurch gekennzeichnet, daß das Ritzel ein- oder mehrteilig ist.

6. Antriebseinheit nach Anspruch 4 oder 5, dadurch gekennzeichnet, daß das Ritzel (2.10) in axialer Richtung auf der einen oder der anderen der beiden Lager (2.4, 2.5) oder zwischen diesen beiden Lagern angeordnet ist.

7. Antriebseinheit nach einem der Ansprüche 1 bis 6, dadurch gekennzeichnet, daß die Retarderwelle (2.1) eine vollständig oder teilweise ausgeführte Hohlwelle ist.

8. Antriebseinheit nach einem der Ansprüche 1 bis 7, dadurch gekennzeichnet, daß das Dichtelement ein einziges Element ist.

9. Antriebseinheit nach einem der Ansprüche 1 bis 7, dadurch gekennzeichnet, daß das Dichtelement ein Doppelelement ist.

10. Antriebseinheit nach Anspruch 9, dadurch gekennzeichnet, daß das Doppelelement einen Freiraum zwischen den einzelnen Dichtelementen umfaßt.

11. Antriebseinheit nach Anspruch 10, dadurch gekennzeichnet, daß der Freiraum eine Öffnung zur Erkennung von Leckagen aufweist.

12. Antriebseinheit nach Anspruch 9, dadurch gekennzeichnet, daß der Freiraum mit einer Flüssigkeit gefüllt ist.

## Claims

1. Drive unit for a motor vehicle,
1.1 with an engine (1);
1.2 with a transmission (2) which has a gear box (2.2);
1.3 with a retarder (3) which has a rotor (3.1) and a stator (3.2);
1.4 a retarder shaft (2.1) is provided, which is supported by at least two bearings (2.4, 2.5); wherein
1.5 a sealing element (2.9) is arranged between the gear box and the retarder (3) such that
1.6 the lubricant of the retarder bearing and/or the transmission (2) is separated from the operating medium of the retarder,
characterised in that
1.7 the sealing element is located on the retarder shaft (2.1) inside the external wall (2.3) of the gear box (2.2) and
1.8 the part of the external wall (2.3) supporting the retarder or the retarder shaft is constructed as a cover and is connected to the rest of the gear box (2.2).

2. Drive unit according to Claim 1, characterised in that the retarder shaft (2.1) is disposed on the transmission.

3. Drive unit according to one of Claims 1 to 2, characterised in that the retarder shaft (2.1) projects freely beyond an external wall (2.3) of the gear box (2.2).

4. Drive unit according to one of Claims 1 to 3, characterised in that the retarder shaft (2.1) at the same time bears a pinion (2.10) of a high gear.

5. Drive unit according to Claim 4, characterised in that the pinion is constructed of a single part or multiple parts.

6. Drive unit according to Claim 4 or 5, characterised in that the pinion (2.10) is arranged in axial direction on either one of the two bearings (2.4, 2.5) or between these two bearings.

7. Drive unit according to one of Claims 1 to 6, characterised in that the retarder shaft (2.1) is a fully or partially formed hollow shaft.

8. Drive unit according to one of Claims 1 to 7, characterised in that the sealing element is a single element.

9. Drive unit according to one of Claims 1 to 7, characterised in that the sealing element is a double element.

10. Drive unit according to Claim 9, characterised in that the double element encompasses a free space between the individual sealing elements.

11. Drive unit according to Claim 10, characterised in that the free space has an opening for the detection of leaks.

12. Drive unit according to Claim 9, characterised in that the free space is filled with a liquid.

## Revendications

1. Unité de transmission pour un véhicule automobile
1.1 avec un moteur (1)
1.2 avec une boîte de transmission (3) qui présente un carter de transmission (2.2)
1.3 avec un ralentisseur (3) qui présente un rotor (3.1) et un stator (3.2)
1.4 il est prévu un arbre de ralentisseur (2.1) qui est supporté par au moins deux paliers (2.4, 2.5)
1.5 un élément d'étanchéité (2.9) est placé entre le carter de la transmission et le ralentisseur (3) de telle sorte que
1.6 l'agent lubrifiant du palier du ralentisseur et/ou de la transmission (2) soit séparé du fluide de travail du ralentisseur,
caractérisé en ce que
1.7 l'élément d'étanchéité se trouve sur l'arbre du ralentisseur (2.1) à l'intérieur de la paroi extérieure (2.3) du carter de la transmission (2.2) et
1.8 la partie afférente de la paroi extérieure (2.3) qui porte le ralentisseur ou l'arbre du ralentisseur est conformée en tant que couvercle et relié avec le reste du carter de la transmission (2.2)

2. Unité de transmission selon la revendication 1, caractérisée en ce que l'arbre du ralentisseur (2.1) est logé dans la transmission.

3. Unité de transmission selon l'une des revendications 1 à 2, caractérisée en ce que l'arbre du ralentisseur (2.1) sort librement hors d'une paroi extérieure (2.3) du carter de la transmission (2.2).

4. Unité de transmission selon l'une des revendications 1 à 3, caractérisée en ce que l'arbre du ralentisseur (2.1) porte en même temps un pignon (2.10) d'un multiplicateur de vitesse.

5. Unité de transmission selon la revendication 4, caractérisée en ce que le pignon est monobloc ou en plusieurs parties.

6. Unité de transmission selon la revendication 4 ou 5, caractérisée en ce que le pignon (2.10) est placé, dans la direction axiale, sur l'un ou sur l'autre des deux paliers (2.4, 2.5) ou entre ces deux paliers.

7. Unité de transmission selon l'une des revendications 1 à 6, caractérisée en ce que l'arbre du ralentisseur (2.1) est un arbre réalisé complètement ou en partie creux.

8. Unité de transmission selon l'une des revendications 1 à 7, caractérisée en ce que l'élément d'étanchéité est un élément unique.

9. Unité de transmission selon l'une des revendications 1 à 7, caractérisée en ce que l'élément d'étanchéité est un élément double.

10. Unité de transmission selon la revendication 9, caractérisée en ce que l'élément double comprend un espace libre entre les éléments d'étanchéité individuels.

11. Unité de transmission selon la revendication 10, caractérisée en ce que l'espace libre présente une ouverture pour la reconnaissance des fuites.

12. Unité de transmission selon la revendication 9, caractérisée en ce que l'espace libre est empli par un liquide.
